# EUROPÄISCHE PATENTANMELDUNG

(11) **EP 0 582 844 A1**
(43) Veröffentlichungstag der Anmeldung: **16.02.1994**
(21) Anmeldenummer: 93111148.8
(22) Anmeldetag: 12.07.1993
(51) Int. Cl.: H01G 9/00, H01G 9/24, H01G 9/05

(54) **Kondensator, insbesondere Elektrolytkondensator**

(30) Priorität: 05.08.1992 DE 4225920
(71) Anmelder: ROEDERSTEIN SPEZIALFABRIKEN FÜR BAUELEMENTE DER ELEKTRONIK UND KONDENSATOREN DER STARKSTROMTECHNIK GmbH, D-84003 Landshut (DE)
(72) Erfinder: Harpaintner, Alfons, D-84051 Essenbach (DE); Bub, Hubertus, D-90419 Nürnberg (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(57) **Zusammenfassung**

Es wird ein Kondensator, insbesondere ein Elektrolytkondensator (10) mit Anode (12), Kathode (20) und Dielektrikum (14) beschrieben, bei dem das Dielektrikum (14) zumindest aus einer Schicht (18) besteht, deren Dielektrizitätskonstante größer ist als die Dielektrizitätskonstante des entsprechenden Oxids (16) des jeweiligen Trägermaterials der Schicht.

## Beschreibung

Die Erfindung betrifft einen Kondensator, insbesondere Elektrolytkondensator, mit einer Anode, einer Kathode und einem zwischen diesen angeordneten Dielektrikum.

Ein wesentliches Kriterium für die Güte von Kondensatoren ist deren C/V-Wert, mit dem das Verhältnis zwischen der Kapazität und dem betreffenden Spannungswert angegeben wird.

Ziel der Erfindung ist es, einen weiteren Kondensator der eingangs genannten Art zu schaffen, der trotz eines kompakten Aufbaus insbesondere einen im Vergleich zu den herkömmlichen Kondensatoren höheren C/V-Wert aufweist.

Die Aufgabe wird nach der Erfindung dadurch gelöst, daß das Dielektrikum zumindest aus einer Schicht besteht, deren Dielektrizitätskonstante größer ist als die Dielektrizitätskonstante des entsprechenden Oxids des jeweiligen Trägermaterials der Schicht.

Aufgrund dieser Ausbildung wird eine wesentliche Erhöhung der Dielektrizitätskonstanten erzielt, wodurch sich auch entsprechend höhere C/V-Werte ergeben. Entscheidend höhere C/V-Werte sind bei einer möglichst lückenlos und großflächig aufgebrachten Schicht bereits bei kleinsten Schichtdicken realisierbar, so daß der Kondensator im Aufbau relativ kompakt gehalten werden kann.

Die aufgebrachte Schicht besteht vorzugsweise aus Titanaten, Zirkonaten, Stannaten oder Mischungen der genannten Stoffe. Bevorzugt sind Schichten aus BaTiO₃, CaTiO₃, SrTiO₃ oder MgTiO₃, und es ist ebenfalls möglich, Schichten aus TiO₂ zu verwenden.

Das Dielektrikum kann eine insbesondere durch anodische Oxidation auf die Anode aufgebrachte Oxidschicht umfassen, auf die beispielsweise die Bariumtitanat (BaTiO₃)-Schicht aufgebracht ist. Durch die aufgebrachte Schicht wird die Dielektrizitätskonstante des Dielektrikums gegenüber einer reinen Oxidschicht mit entsprechend höherer Dicke wesentlich gesteigert. Beim Aufbringen der Schicht geht diese eine Festkörperreaktion mit der bereits vorhandenen Oxidschicht ein, so daß zumindest in einem Übergangsbereich ein Mischdielektrikum mit entsprechend erhöhter Dielektrizitätskonstanten entsteht.

Das Bariumtitanat kann beispielsweise in Form mikrokristalliner oder nanokristalliner Strukturen auf dem bereits vorhandenen Oxid abgeschieden werden, wobei das Bariumtitanat zweckmäßigerweise möglichst auf der gesamten Oberfläche der vorzugsweise porösen Oxidschicht anzulagern ist. Hierzu kann beispielsweise vorgesehen sein, das Bariumtitanat aus einer wässrigen Lösung abzuscheiden.

In bestimmten Fällen kann die beispielsweise durch anodische Oxidation auf die Anode aufgebrachte Oxidschicht entfallen. In diesem Falle ist die Bariumtitanat-Schicht unmittelbar auf die Anode aufgebracht.

Der Anodenkörper besteht vorzugsweise aus einem Ventilmetall wie insbesondere Ta, Al, Ti oder Nb. Werden derartige Metalle anodisch oxidiert, so zeigt deren elektrochemisch erzeugte Oxidschicht Ventilwirkung in dem Sinne, daß der Strom nur noch in einer Richtung durchgelassen wird.

Vorzugsweise ist ein derartiger Anodenkörper durch einen zweckmäßigerweise porösen Sinterkörper gebildet, was zu einer relativ großen kondensatorwirksamen Fläche führt. Entsprechend groß ist dann auch die Fläche, die von der anzulagernden Schicht, insbesondere aus Bariumtitanat abzudecken ist.

Grundsätzlich kann die Anode jedoch auch aus einem nichtleitenden Grundstoff bestehen, wobei die Leitfähigkeit der Anode dann auf einer chemischen oder physikalischen Behandlung wie insbesondere einer CVD- oder PVD-Behandlung in reduzierender Atmosphäre beruhen kann. Als Grundstoff eignen sich beispielsweise entsprechend leitfähig gemachte Fasermaterialien.

Durch eine Dotierung des Dielektrikums mit Fremdatomen, insbesondere der Elemente Sr, Ca, Mg, Zr, Sn, seltenen Erden und Bi, ist vorzugsweise eine Feineinstellung der Dielektrizitätskonstanten sowie eine Anpassung der Temperaturkurven möglich.

In den Unteransprüchen sind weitere vorteilhafte Ausführungsvarianten der Erfindung angegeben.

Die Erfindung wird im folgenden anhand von Ausführungsbeispielen unter Bezugnahme auf die Zeichnung näher erläutert; in dieser zeigt:
- Figur 1: eine schematische Prinzipdarstellung eines Tantal-Elektrolytkondensators,
- Figur 2: eine Schnittdarstellung des in Figur 1 gezeigten Tantal-Elektrolytkondensators, und
- Figur 3: eine schematische Schnittdarstellung einer praktischen Ausführungsvariante des Tantal-Elektrolytkondensators.

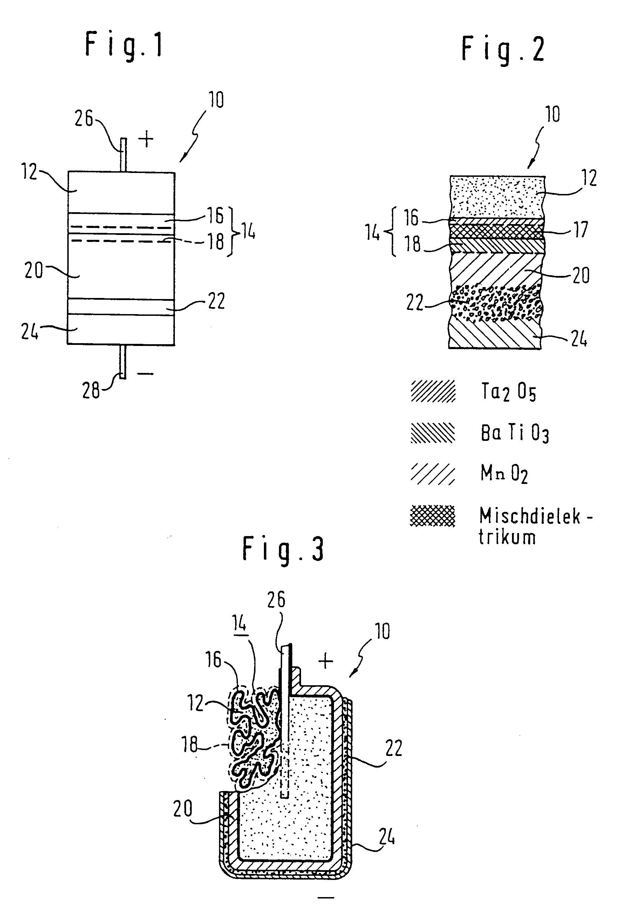

Der in den Figuren 1 bis 3 gezeigte Tantal-Elektrolytkondensator 10 umfaßt eine Anode 12, ein Dielektrikum 14, welches durch eine durch anodische Oxidation auf die Anode 12 aufgebrachte Tantalpentoxid (Ta₂O₅)-Schicht 16 und eine auf diese Oxidschicht 16 aufgebrachte Bariumtitanat (BaTiO₃)-Schicht 18 gebildet ist, sowie eine Kathode 20 mit einer Graphitauflage 22, die durch Leitsilber 24 metallisiert ist.

Die Kondensatoranschlüsse sind durch eine drahtförmige Anodenzuleitung 26 sowie eine drahtförmige Kathodenzuleitung 28 gebildet.

Die Anode 12 ist durch einen porösen Sinterkörper (vergleiche insbesondere Figur 3) aus Tantalpulver gebildet, wodurch eine relativ große wirksame Kondensatorfläche erzielt wird.

Die durch Elektrolyse auf dem Tantal-Sinterkörper gebildete Tantalpentoxid (Ta₂O₅)-Schicht 16 wirkt als Dielektrikum und zeigt eine Ventilwirkung in dem Sinne, daß nur dann ein Strom fließt, wenn der Tantal-Sinterkörper als Anode geschaltet ist. Gleichzeitig dient sie als Haftvermittler für eine nachfolgend aufgebrachte Dielektrikumsschicht.

Auf der Oxidschicht 16 ist möglichst lückenlos eine Bariumtitanat (BaTiO₃)-Schicht 18 abgeschieden, die praktisch die gesamte Oberfläche der eine poröse Struktur besitzenden Tantalpentoxid-Schicht 16 bedeckt. Die Figur 2 zeigt den schmatischen Aufbau eines Kondensators in schematisierter Schnittdarstellung, wobei das Dielektrikum 14 zwischen Kathode 20 und Anode 12 in der bereits erläuterten Weise ausgebildet ist. Die nicht durchreagierte Ta-Oxidschicht ist dabei im Vergleich zu dem Mischdielektrikumsbereich 17 sehr dünn.

Die Bariumtitanat-Schicht 18 wird vorzugsweise aus einer Lösung in feinverteilter, nanokristalliner bis mikrokristalliner Form aufgebracht, wobei sich eine Festkörperreaktion mit der Oxidschicht 16 einstellt, die in einem Übergangsbereich zu einem Mischdielektrikum 17 führt.

Die Dicke der auf den Sinterkörper 12 aufgebrachten Oxidschicht 16 ergibt zusammen mit der Dicke der Bariumtitanat-Schicht 18 eine Gesamtdicke des Dielektrikums 14, welche in erster Näherung die Durchschlagfestigkeit des Kondensators 10 bestimmt und somit den Spannungsbereich angibt, in dem dieser verwendet werden kann.

Nachdem die dünne Bariumtitanat-Schicht 18 bereits bei sehr tiefen Temperaturen eine Festkörperreaktion eingeht, kann dieser Abscheidevorgang problemlos in die üblichen Temperaturprozesse der Ta-Technologie eingegliedert werden. Im Ergebnis wird eine wesentlich höhere Dielektrizitätskonstante des Dielektrikums 14 erzielt.

Die Kathode 20 besteht aus einem Halbleiter, der eine den Reststrom begrenzende Sperrschicht bildet. Die Aufbringung des Halbleiters erfolgt beispielsweise durch Imprägnieren der Anode mit Mangannitrat und dessen Umwandlung zu Mangandioxid MnO₂ (Braunstein).

Diese sogenannte Pyrolyse erfolgt beispielsweise bei Temperaturen um 250°C in mehreren Abschnitten, so daß sich eine ausreichend dicke Schicht ergibt.

Zur Verbesserung der Oberflächenkontakte, das heißt zur Reduzierung möglicher elektrischer Verluste, ist auf die letzte Schicht des Halbleiters die Graphitauflage 22 aufgebracht, die anschließend durch das lötbare Leitsilber 24 metallisiert ist, um das spätere Anlöten der drahtförmigen Kathodenzuleitung 28 oder eines Metallgehäuses zu ermöglichen.

Die Anodenzuleitung 26 kann beispielsweise durch einen eingesinterten Tantaldraht gebildet sein.

Je nach Anwendung kann der erhaltene Kondensator dann beispielsweise in einem zylindrischen, dicht verschlossenen Metallgehäuse oder in einem Kunststoffgehäuse mit Gießharz vergossen werden. In der einfachsten Form kann auch eine Umhüllung mit Kunstharz vorgesehen sein.

Für den Anschluß des Kondensators sind die Zuleitungen 26, 28 jeweils nach außen geführt und gegebenenfalls mit einem, die späteren Kondensatoranschlüsse bildenden, lötfähigen Anschlußdraht verschweißt.

Grundsätzlich ist es auch denkbar, den Kondensator in Chip-Bauweise auszuführen, wobei die Anschlußdrähte entfallen und durch Kontaktflächen oder Anschlußfahnen auf der Unterseite des Kondensatorkörpers ersetzt werden.

Die Erfindung kann sowohl bei nassen als auch bei trockenen Elektrolyten angewandt werden.

## Patentansprüche

1. Kondensator, insbesondere Elektrolytkondensator, mit einer Anode (12), einer Kathode (20) und einem zwischen diesen angeordnetem Dielektrikum (14),
dadurch **gekennzeichnet,**
daß das Dielektrikum (14) zumindest aus einer Schicht (18) besteht, deren Dielektrizitätskonstante größer ist als die Dielektrizitätskonstante des entsprechenden Oxids des jeweiligen Trägermaterials der Schicht.

2. Kondensator nach Anspruch 1,
dadurch **gekennzeichnet,**
daß die Schicht (18) aus BaTiO₃, CaTiO₃, SrTiO₃, TiO₂ oder MgTiO₃ besteht.

3. Kondensator nach Anspruch 1,
dadurch **gekennzeichnet,**
daß Schicht aus Titanaten, Zirkonaten, Stannaten, Niobaten oder Mischungen der genannten Stoffe besteht.

4. Kondensator nach einem der vorhergehenden Ansprüche,
dadurch **gekennzeichnet,**
daß das Dielektrikum (14) eine insbesondere durch anodische Oxidation auf die Anode (12) aufgebrachte Oxidschicht (16) umfaßt, auf die die Schicht (18) aus BaTiO₃, CaTiO₃, SrTiO₃, MgTiO₃ oder TiO₂ aufgebracht ist, und daß der Anodenkörper (12) ein vorzugsweise poröser Sinterkörper ist.

5. Kondensator nach einem der vorhergehenden Ansprüche,
dadurch **gekennzeichnet,**
daß die jeweilige Schicht (18) unmittelbar auf die Anode (12) aufgebracht ist.

6. Kondensator nach einem der vorhergehenden Ansprüche,
dadurch **gekennzeichnet,**
daß die Anode einen Anodenkörper (12) umfaßt, der aus einem Ventilmetall wie insbesondere Ta, Al, Ti oder Nb besteht.

7. Kondensator nach einem der vorhergehenden Ansprüche,
dadurch **gekennzeichnet,**
daß die Anode (12) aus einem nichtleitenden, vorzugsweise Fasermaterialien umfassenden Grundstoff besteht und die Leitfähigkeit der Anode (12) auf einer chemischen und / oder physikalischen Behandlung wie insbesondere einer CVD- oder PVD-Behandlung dieses Grundstoffes beruht.

8. Kondensator nach einem der vorhergehenden Ansprühe,
dadurch **gekennzeichnet,**
daß die BaTiO₃-Schicht (18) eine Dicke von etwa 30 nm bis 120 nm, vorzugsweise etwa 50 nm bis 100 nm, insbesondere etwa 50 nm bis 85 nm beträgt.

9. Kondensator nach einem der vorhergehenden Ansprüche,
dadurch **gekennzeichnet,**
daß das Dielektrikum (14) mit Fremdatomen insbesondere der Elemente Sr, Ca, Mg, Zr, Sn, Nb, Pb, seltenen Erden oder Bi dotiert ist.

10. Kondensator nach einem der vorhergehenden Ansprüche,
dadurch **gekennzeichnet,**
daß die Kathode (20) aus einem insbesondere durch Pyrolyse auf das Dieleketrikum (14) aufgebrachten Halbleiter, insbesondere MnO₂, besteht oder von einem flüssigen Elektrolyt gebildet ist.
